# EUROPÄISCHE PATENTANMELDUNG

(11) **EP 2 179 889 A1**
(43) Veröffentlichungstag der Anmeldung: **28.04.2010**
(21) Anmeldenummer: 09160290.4
(22) Anmeldetag: 14.05.2009
(51) Int. Cl.: B60P 3/055

(54) **Anhänger zum Transport von Gasflaschen**

(30) Priorität: 25.10.2008 DE 202008014254 U
(71) Anmelder: Eurotank GmbH, 47546 Kalkar (DE)
(72) Erfinder: Peters, Franz-Gerd, 47546, Kalkar (DE)
(74) Vertreter: Viering, Jentschura & Partner

(57) **Zusammenfassung**

Bei einem Anhänger (1), insbesondere Auflieger, mit zwischen sich eine Ladefläche (4) des Anhängers (1) für darauf angeordnete zylindrische Behälter (2), insbesondere Gasflaschen mit hohem Betriebsdruck, begrenzenden Vertikalstreben (7), die an einem die Ladefläche (4) tragenden und/oder ausbildenden Rahmen (3) befestigt sind und die jeweils in einem der Ladefläche (4) abgewandten Bereich mit einer Horizontalstrebe (9), deren Längsachse nicht parallel zur Längsachse der zylindrischen Behälter (2) ausgerichtet ist, in einer die zylindrischen Behälter (2) mittels eines lösbaren mechanischen Verspannmittels (10) mit einer quer zur Behälterlängsachse wirkenden Kraft vorspannend und gegeneinander und/oder gegen die Ladefläche (4) pressenden Weise verbunden sind, wobei das mechanische Verspannmittel (10) ein mit der jeweiligen Vertikalstrebe (7) insbesondere über eine Schraubverbindung (19) verbundenes und mit der jeweiligen Horizontalstrebe (9) oder dem Rahmen (3) verbundenes Befestigungselement (11) umfasst, soll eine Lösung geschaffen werden, die auf konstruktiver Weise und kostengünstig einen vereinfachten und verbesserten Anhänger zum sicheren Transport von Gasflaschen mit hohem Betriebsdruck bereitstellt. Dies wird dadurch erreicht, dass die Verbindung zwischen einer Vertikalstrebe (7) und einer Horizontalstrebe (9) und/oder dem Rahmen (3) bewirkende mechanische Verspannmittel (10) ein auf die Vertikalstrebe (7) und/oder die Horizontalstrebe (9) wirkendes Federelement (17) umfasst, das eine Bewegung von Vertikalstrebe (7) und/oder Horizontalstrebe (9) relativ zur Ladefläche (4) gegen eine von dem Federelement (17) ausgeübte Vorspannkraft zulässt.

## Beschreibung

Die Erfindung richtet sich auf einen Anhänger, insbesondere Auflieger, mit zwischen sich eine Ladefläche des Anhängers für darauf angeordnete zylindrische Behälter, insbesondere Gasflaschen mit hohem Betriebsdruck, begrenzenden Vertikalstreben, die an einem die Ladefläche tragenden und/oder ausbildenden Rahmen befestigt sind und die jeweils in einem der Ladefläche abgewandten Bereich mit einer Horizontalstrebe, deren Längsachse nicht parallel zur Längsachse der zylindrischen Behälter ausgerichtet ist, in einer die zylindrischen Behälter mittels eines lösbaren mechanischen Verspannmittels mit einer quer zur Behälterlängsachse wirkenden Kraft vorspannend und gegeneinander und/oder gegen die Ladefläche pressenden Weise verbunden sind, wobei das mechanische Verspannmittel ein mit der jeweiligen Vertikalstrebe insbesondere über eine Schraubverbindung verbundenes und mit der jeweiligen Horizontalstrebe oder dem Rahmen verbundenes Befestigungselement umfasst.

Weiterhin richtet sich die Erfindung auf ein Transportmodul eines Anhängers, insbesondere Aufliegers, mit zwischen sich einer Kompartiment-Ladefläche des Transportmoduls für darauf angeordnete zylindrische Behälter, insbesondere Gasflaschen mit hohem Betriebsdruck, begrenzenden Vertikalstreben, die an einem die Kompartiment-Ladefläche tragenden und/oder ausbildenden Rahmen befestigt sind und die jeweils in einem der Kompartiment-Ladefläche abgewandten Bereich mit einer Horizontalstrebe, deren Längsachse nicht parallel zur Längsachse der zylindrischen Behälter ausgerichtet ist, in einer die zylindrischen Behälter mittels eines lösbaren mechanischen Verspannmittels mit einer quer zur Behälterlängsachse wirkenden Kraft vorspannenden und gegeneinander und/oder gegen die Kompartiment-Ladefläche pressenden Weise verbunden sind, wobei das mechanische Verspannmittel ein mit der jeweiligen Vertikalstrebe insbesondere über eine Schraubverbindung verbundenes und mit der jeweiligen Horizontalstrebe oder dem Rahmen verbundenes Befestigungselement umfasst.

Derartige Anhänger oder Auflieger werden zum Transport von Gasflaschen mit hohem Betriebsdruck verwendet, da ein Transport von solchen Gasen, die einen Betriebsdruck bis annähernd 300 bar aufweisen, in Tankfahrzeugen wegen der erforderlichen Dicke des Tanks praktisch nicht mehr in Frage kommt. Die bekannten Anhänger oder Auflieger sind entweder für einen stehenden oder einen liegenden Transport der Gasflaschen ausgebildet.

Ein Anhänger der eingangs genannten Art ist aus der EP 1 186 470 B1 bekannt. Dieser Anhänger zum Transport von Gasflaschen mit hohem Betriebsdruck weist einen Rahmen auf, der mittels Vertikalstreben in einzelne Kompartimente unterteilt ist. Innerhalb eines Kompartiments sind die Gasflaschen in horizontalen Lagen zwischen den Vertikalstreben auf dem Tragrahmen aufliegend angeordnet. Die einzelnen Vertikalstreben sind oberhalb der obersten und unterhalb der untersten Lage der Gasflaschen mittels Horizontalstreben miteinander verbunden. Die Horizontalstreben sind derart ausgestaltet, dass sie die jeweiligen Vertikalstreben rahmenartig, d.h. mit zwei Längsträgern und zwei an diesen über Befestigungselemente befestigten Querträgern, umgreifen. Lediglich die in der obersten Lage angeordneten Gasflaschen sind mittels einer Trägervorrichtung zur Ausbildung einer starren Einheit lösbar miteinander verbunden. Aufgrund der Trägervorrichtung in Kombination mit einer wabenartigen Anordnung der Gasflaschen, bei der zwei horizontal benachbarte Lagen der Gasflaschen so gegeneinander seitlich versetzt sind, dass die Gasflaschen der oberen Lage in den zwischen den Gasflaschen der unteren Lage gebildeten Vertiefungen zu liegen kommen, wird die Gasflaschenanordnung eines Kompartiments stabil und sicher gehalten. Um die Stabilität der Gasflaschenanordnung weiter zu erhöhen, sind flexible, am Tragrahmen befestigte Spannorgane umlaufend um eine jeweilige Gasflaschenanordnung vorgesehen.

Nachteilig bei diesem Stand der Technik ist, dass Abstandshalter, die zwischen den Gasflaschen angeordnet sind, lediglich nur eine geringe thermische Ausdehnung der Gasflaschen beim Befüllen oder während des Transports ausgleichen. Dadurch ist es bei einer zu darüber hinaus gehenden Durchmesseränderung der Gasflaschen, die auch infolge des Entleerens der Gasflaschen auftreten kann, erforderlich, die Trägervorrichtung von den Gasflaschen der obersten Lage zu lösen und neu zu justieren, damit die Gasflaschenanordnung insgesamt wieder verrutschfest gesichert ist.

Es besteht somit das Bedürfnis, einen Anhänger zu schaffen, der bei einer Veränderung des Durchmessers der Gasflaschen ohne eine nachträgliche Justierung eines Spannorgans ein verrutschfestes Sichern der Gasflaschenanordnung gewährleistet.

Der Erfindung liegt die Aufgabe zu Grunde, eine Lösung zu schaffen, die auf konstruktiv einfache Weise und kostengünstig einen vereinfachten und verbesserten Anhänger zum sicheren Transport von Gasflaschen mit hohem Betriebsdruck bereitstellt.

Bei einem Anhänger sowie einem Transportmodul der eingangs bezeichneten Art wird diese Aufgabe erfindungsgemäß dadurch gelöst, dass das die Verbindung zwischen einer Vertikalstrebe und einer Horizontalstrebe und/oder dem Rahmen bewirkende mechanische Verspannmittel ein auf die Vertikalstrebe und/oder die Horizontalstrebe wirkendes Federelement umfasst, das eine Bewegung von Vertikalstrebe und/oder Horizontalstrebe relativ zur Ladefläche des Anhängers gegen eine von dem Federelement ausgeübte Vorspannkraft zulässt.

Ebenso wird diese Aufgabe von einem Transportmodul dadurch gelöst, dass das die Verbindung zwischen einer Vertikalstrebe und einer Horizontalstrebe und/oder dem Rahmen bewirkende mechanische Verspannmittel ein auf die Vertikalstrebe und/oder die Horizontalstrebe wirkendes Federelement umfasst, das eine Bewegung von Vertikalstrebe und/oder Horizontalstrebe relativ zur Kompartiment-Ladefläche gegen eine von dem Federelement ausgeübte Vorspannkraft zulässt.

Vorteilhafte und zweckmäßige Ausgestaltungen und Weiterbildungen der Erfindung ergeben sich aus den entsprechenden Unteransprüchen.

Mit der Erfindung wird eine Möglichkeit geschaffen, mit der Gasflaschen mit hohem Betriebsdruck auf der Ladefläche eines Anhängers und eines Transportmoduls verrutschfest gesichert werden können, ohne das infolge einer Durchmesseränderung der Gasflaschen ein nachträgliches Verspannen oder Justieren eines Verspannorgans notwendig ist. Somit sind die aus dem Stand der Technik bekannten Abstandshalter zum Ausgleich einer thermischen Ausdehnung der Gasflaschen sowie um die Gasflaschenanordnung eines Kompartiments umlaufenden Spannorgane nicht mehr erforderlich, da erfindungsgemäß die Horizontalstrebe mittels eines Federelements relativ zur Ladefläche gegen die von dem Federelement ausgeübte Kraft bewegbar ist und somit auf die oberste Lage der Gasflaschenanordnung eines Kompartiments drückt. Dabei gewährleistet das Federelement eine Kompensation der Durchmesseränderung der Gasflaschen, so dass die Gasflaschenanordnung eines Kompartiments sowohl bei gefüllten als auch bei leeren Gasflaschen in gegen die Ladefläche pressender Weise auf der Ladefläche des Anhängers bzw. des Transportmoduls verrutschfest gesichert ist.

Zur sicheren und stabilen Fixierung des Verspannmittels sieht die Erfindung in Ausgestaltung vor, dass das Verspannmittel ein winkelförmiges Befestigungselement umfasst, das einerseits an der Vertikalstrebe und andererseits an der Horizontalstrebe oder dem Rahmen befestigt ist, und auf das Federelement einwirkt.

Eine konstruktiv einfach zu realisierende Möglichkeit zur Erhöhung der Stabilität besteht ferner darin, dass das Befestigungselement in Form eines Winkelelements ausgebildet ist, dessen erster Winkelabschnitt an der Vertikalstrebe und dessen dritter Winkelabschnitt an der Horizontalstrebe oder dem Rahmen befestigt ist.

Besonders zweckmäßig ist es dabei, wenn der erste Winkelabschnitt oder der dritte Winkelabschnitt das mit einer Schraubverbindung zusammenwirkende Federelement trägt.

Im Hinblick auf die Stabilität der aus Vertikalstreben und Horizontalstreben gebildeten Konstruktion ist es besonders günstig, wenn der erste Winkelabschnitt mittels der Schraubverbindung an der zugeordneten Vertikalstrebe befestigt und gelagert ist.

In Weiterbildung sieht die Erfindung vor, dass der erste Winkelabschnitt als von der Schraubverbindung durchdrungenes Profilrohr ausgebildet ist, so dass die Schraubverbindung sicher und gerichtet gehalten ist.

Zur Erhöhung der Stabilität der aus Vertikalstreben und Horizontalstreben gebildeten rahmenartigen Konstruktion sieht die Erfindung in Ausgestaltung vor, dass in dem ersten Winkelabschnitt ein zwei an gegenüberliegenden Längskanten angeordnete Vertikalstreben verbundener Querträger angeordnet ist.

Um den Einbauraum des Verspannmittels klein zu halten, ist es weiterhin von Vorteil, wenn das Federelement zumindest eine Tellerfeder, vorzugsweise eine aus mehreren Tellerfedern bestehende Federsäule, ist. Dadurch ist es möglich, dass das Federelement auch bei kleinem Einbauraum sehr große Kräfte aufnehmen oder aufbringen kann.

In weiterer Ausgestaltung der Erfindung ist vorgesehen, dass die zylindrischen Behälter senkrecht zur Längsachse des Anhängers bzw. Transportmoduls in horizontalen Lagen wabenartig auf der Ladefläche angeordnet sind. In Folge dessen wird die Stabilität der Gasflaschenanordnung gegenüber herkömmlichen Anordnungen verbessert, wobei gleichzeitig die Gasflaschen in sehr kompakter und platzsparender Weise angeordnet sind.

Damit auch nachträglich noch zusätzliche Gasflaschen aufgeladen und mit der übrigen Gasflaschenanordnung stabil verbunden werden können, ist es weiterhin von Vorteil, wenn die Vertikalstreben in Richtung der Längsachse des Anhängers verschiebbar am Rahmen gelagert sind. Zweckmäßigerweise sind die Abstände zwischen den entlang einer Längskante des Rahmens angeordneten Vertikalstreben so bemessen, dass sie einem vielfachen des Durchmessers der zylindrischen Behälter entsprechen.

Zum Schutz von Ventilen und/oder von Anschlussarmaturen der zylindrischen Behälter vor mechanischer Krafteinwirkung sind Sicherungsmittel vorgesehen, die den Raum zwischen den Vertikalstreben und der Ladefläche zumindest an einer Außenseite des Anhängers teilweise abdecken, so dass die Armaturen und Verbindungsleitungen gegen eine mechanische Einwirkung von Außen geschützt werden.

In Weiterbildung der Erfindung ist vorgesehen, dass die Sicherungsmittel in Form von an den Vertikalstreben über Scharniere angeschlagene Türen, die sich seitwärts oder nach oben öffnen lassen, oder in Form an oder in den Vertikalstreben geführten Sicherheitsrolladen ausgebildet sind.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur die Ansprüche definiert.

Die Erfindung wird im Folgenden anhand eines Ausführungsbeispiels unter Bezugnahme auf die zugehörigen Zeichnungen näher erläutert. Es zeigt:
- Fig. 1: einen mit Gasflaschen beladenen Anhänger in Seitenansicht,
- Fig. 2: eine Aufsicht auf die Ladefläche des Anhängers,
- Fig. 3: eine perspektivische Darstellung des mechanischen Verspannmittels und
- Fig. 4: eine Schnittdarstellung des mechanischen Verspannmittels.

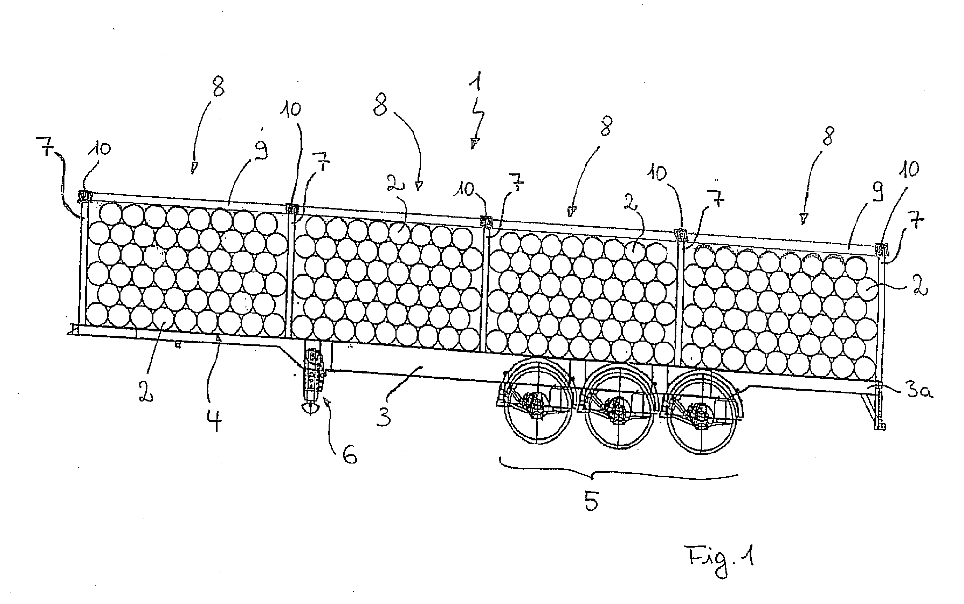

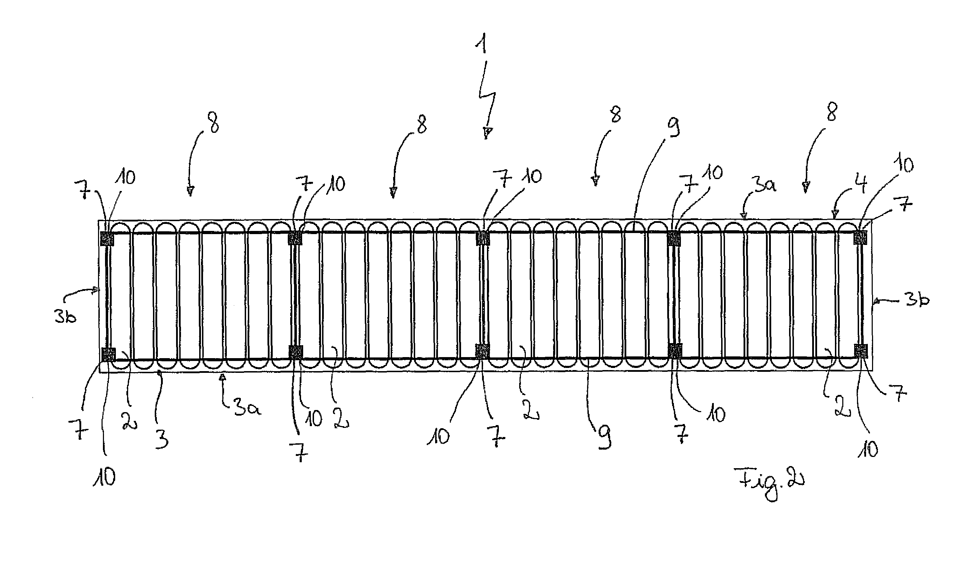

Ein in den Figuren 1 und 2 dargestellter und als Sattelauflieger ausgebildeter Anhänger 1 zum Transport von Gasflaschen 2 mit hohem Betriebsdruck umfasst einen Rahmen 3, auf dessen Oberseite eine Ladefläche 4 zum Transport der Gasflaschen 2 ausgebildet ist und auf dessen Unterseite ein Fahrwerk 5 des Anhängers 1 sowie eine Stützwinde 6 befestigt sind. Der Rahmen 3 weist ferner mehrere an diesem im Bereich einer jeweiligen Längskante 3a des Rahmens 3 befestigte Vertikalstreben 7 auf. Der Rahmen 3 des Anhängers 1 ist durch die Vertikalstreben 7 in einzelne Kompartimente 8 unterteilt, so dass auf diese Weise die Ladefläche 4 in den gezeigten Darstellungen vier Kompartimente 8 aufweist. Dabei wird ein Kompartiment 8 von jeweils vier Vertikalstreben 7 gebildet. Jeweils zwei dieser Vertikalstreben 7 eines Kompartiments sind entlang einer jeweiligen Längskante 3a sich gegenüberliegend angeordnet, wobei diesem Paar wiederum ein Paar von Vertikalstreben 7 auf der anderen Längskante 3a des Rahmens 3 gegenüberliegt, wie schematisch in Fig. 2 dargestellt ist. Die Abstände zwischen den entlang der Längskante 3a des Rahmens 3 angeordneten Vertikalstreben 7 sind dabei derart bemessen, dass sie einem Vielfachen des Durchmessers der Gasflaschen 2 entsprechen. Auf diese Weise können eine Vielzahl von Gasflaschen 2 innerhalb eines Kompartiments angeordnet und transportiert werden.

Die einzelnen Gasflaschen 2 eines Kompartiments 8 sind mit nicht dargestellten Ventilen versehen und untereinander über Verbindungsleitungen verbunden, wobei die Gasflaschen 2 jedes Kompartiments 8 sich insgesamt über einen Kompartiment-Haupthahn auf- und zudrehen lassen. Die Gasflaschen 2 sind in ihrer Länge derart bemessen, dass sie einschließlich der einseitig am Flaschenende vorgesehenen Ventile und Verbindungsstücke nicht über den Rahmen 3 seitlich hinausragen, also an keiner Stelle über die Längskanten 3a und die Querkanten 3b überstehen. Zum Schutz der Ventile und der Verbindungsleitungen vor mechanischer Krafteinwirkung sind nicht dargestellte Sicherungsmittel vorgesehen, die zumindest während des Transports einen Zwischenraum zwischen zwei auf einer Längskante 3a oder einer Querkante 3b benachbart zueinander angeordneter Vertikalstreben 7 abdecken. Dabei können die Sicherungsmittel in Form von an den Vertikalstreben 7 über Scharniere angeschlagene Türen, die sich seitwärts oder nach oben öffnen lassen, oder in Form von an oder in den Vertikalstreben 7 geführten Sicherheitsrolladen ausgebildet sein.

Innerhalb eines Kompartiments 8 sind die in Form von zylindrischen Behältern ausgebildeten Gasflaschen 2 senkrecht zur Längsachse des Anhängers 1 und in vertikal übereinander liegenden Lagen zwischen den Vertikalstreben 7 quer auf dem Anhänger 1 angeordnet, wobei die jeweils unterste Lage auf der Ladefläche 4 des Rahmens 3 aufliegt. Zwei vertikal benachbarte Lagen der Gasflaschen 2 sind derart seitlich gegeneinander versetzt, dass die Gasflaschen 2 der jeweils oberen Lage in den zwischen jeweils zwei Gasflaschen 2 der jeweils unteren Lage gebildeten Zwischenraum zu liegen kommen. Auf diese Weise sind die Gasflaschen 2 innerhalb eines Kompartiments 8 wabenartig angeordnet.

Entlang einer jeweiligen Längskante 3a des Rahmens 3 sind die dort befestigten Vertikalstreben 7 oberhalb der obersten Lage der Gasflaschen 2 in einem der Ladefläche 4 abgewandten Bereich mittels jeweils einer quer zur Längsachse der Gasflaschen 2 und zwar im Ausführungsbeispiel im Wesentlichen parallel zur jeweiligen Längskante 3a verlaufenden Harizontalstrebe 9 miteinander verbunden, die aus mehreren Einzelstreben zusammengesetzt sein kann. Die beiden Längsenden der beiden Horizontalstreben 9 ragen dabei nicht über die jeweiligen Querkanten 3b des Rahmens 3 hinaus. In dem dargestellten Ausführungsbeispiel sind beide Horizontalstreben 9 jeweils als Schiene ausgebildet und verlaufen quer und senkrecht zur Längsachse der Gasflaschen 2 und parallel zur jeweiligen Längskante 3a des Rahmens 3.

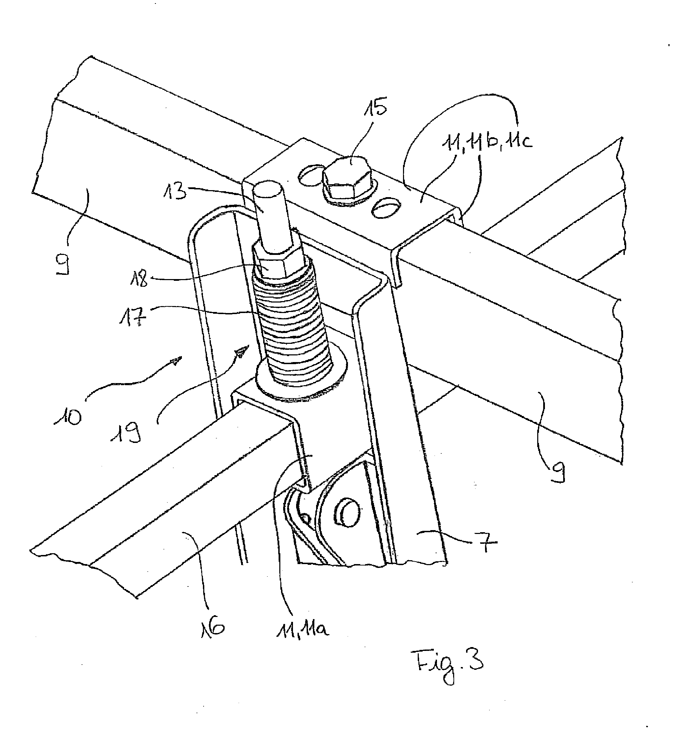

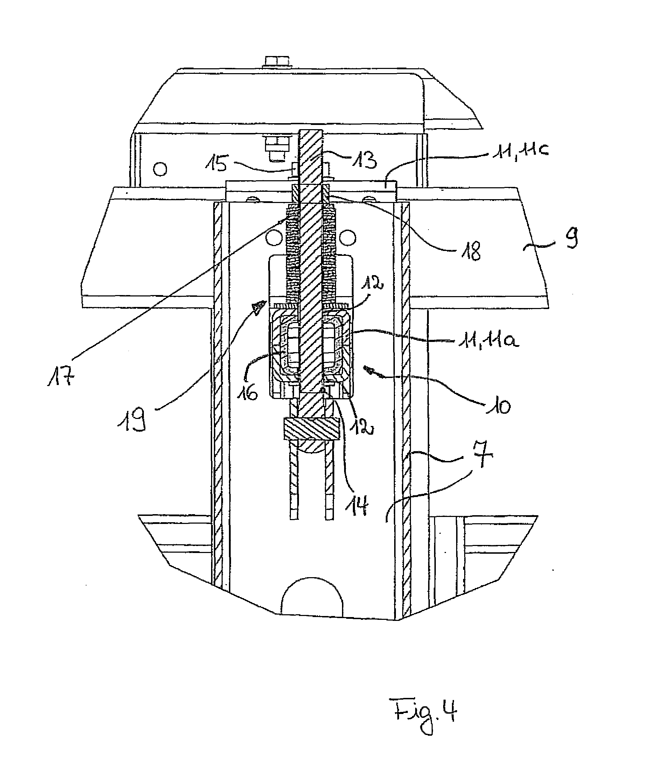

Die jeweilige Horizontalstrebe 9 ist lösbar mit einer entsprechenden Vertikalstrebe 7 mittels eines mechanischen Verspannmittels 10 verbunden. Das mechanische Verspannmittel 10 umfasst ein in den Figuren 3 und 4 näher dargestelltes Befestigungselement 11, das in Form eines Winkelelements ausgebildet und am oberen Endbereich einer jeden Vertikalstrebe 7 angeordnet ist. Ein erster Winkelabschnitt 11a des Befestigungselements 11 ist in Form eines Profilrohrs ausgebildet. Dieser erste Winkelabschnitt 11a weist auf zwei seiner sich gegenüberliegenden Seitenflächen jeweils eine Durchtrittsöffnung 12 auf, durch die eine im wesentlichen parallel zur jeweils zugeordneten Vertikalstrebe 7 ausgerichtete Schraube 13 einer Schraubverbindung 19 hindurch geführt ist. Der erste Winkelabschnitt 11a des Befestigungselements 11 führt und trägt die Schraube 13. Eine Aufnahmebohrung 14 ist weiterhin an der zugeordneten Vertikalstrebe 7 ausgebildet, die das durch die Durchgangsöffnungen 12 des ersten Winkelabschnitts 11a hindurch geführte Ende der Schraube 13 aufnimmt und an der Vertikalstrebe 7 mittels einer Verschraubungsverbindung befestigt. Auf diese Weise ist der erste Winkelabschnitt 11a des Befestigungselements 11 mittels der Schraube 13 an einer zugeordneten Vertikalstrebe 7, die in Form einer U-Schiene ausgebildet ist, gelagert. Der zweite Winkelabschnitt 11b des Befestigungselements 11 ist auf der der Schraube 13 gegenüberliegenden, rückwärtigen Seite der Vertikalstrebe 7 senkrecht und quer zum ersten Winkelabschnitt 11a an diesem angeordnet und weist an seinem freien Ende einen als Halterung für die Horizontalstrebe 9 ausgebildeten dritten Abschnitt 11c auf. Der Abschnitt 11c ist winkelförmig in Längsrichtung der Horizontalstrebe 9 ausgebildet und er hinter- und umgreift die Horizontalstrebe 9, in dem er vom zweiten Winkelabschnitt 11b ausgehend mit einem ersten Teil auf der Oberseite der Horizontalstrebe 9 aufliegt und mit einem zweiten Winkelteil auf der rückwärtigen Seite der Vertikalstrebe 7 zugewandten Seitenfläche der Horizontalstrebe 9 aufliegt. In der Darstellung von Fig. 3 weist der dritte Abschnitt 11c drei Bohrungen auf, wobei durch die mittlere der drei Bohrungen eine als Sechskantschraube ausgebildete Schraube 15 in eine in der Horizontalstrebe 9 in der an dem oberseitigen Teil des Abschnitts 11c anliegenden Seitenfläche ausgebildete Bohrung, die in den Figuren nicht näher dargestellt ist, eingeschraubt ist. Dadurch ist der zweite Winkelabschnitt 11b, der an der der Vertikalstrebe 7 abgewandten Seitenfläche aufliegt, an der Horizontalstrebe 9 mittels der Schraube 15 angeschraubt und befestigt.

An dem Befestigungselement 11 ist ferner ein Querträger 16 befestigt, der zur Erhöhung der Stabilität der aus Vertikalstreben 7 und Horizontalstreben 9 bestehenden Konstruktion dient, ohne dabei das Eigengewicht des Anhängers 1 wesentlich zu erhöhen. Der Querträger 16 verläuft durch den in Form eines Profilrohrs ausgebildeten ersten Winkelabschnitt 11a des Befestigungselements 11 hindurch, so dass der erste Winkelabschnitt 11a den Querträger 16 umfasst. Der Querträger 16 ist ebenfalls in Form eines Profilrohrs ausgebildet und verbindet quer zu der Anhängerlängsachse verlaufend zwei Vertikalstreben 7, die an den entsprechenden Längskanten 3a des Rahmens 3 sich gegenüberliegend angeordnet sind. Zur Befestigung des Querträgers 16 an dem Befestigungselement 11 ist jeweils ein Loch in sich gegenüberliegenden horizontalen Seitenfläche des Querträgers 16 ausgebildet, durch die die Schraube 13 der Schraubverbindung 19 hindurch geführt ist. Dadurch wird der Querträger 16 sicher und stabil an dem Befestigungselement 11 gehalten.

Das mechanische Verspannmittel 10 weist ferner ein Federelement 17 auf, das auf einen Abschnitt der Schraube 13, der aus dem ersten Winkelabschnitt 11a hervorsteht, aufgesteckt ist und mittels einer Sechskantmutter 18 unter Ausbildung einer Vorspannkraft des Federelements 17 in auf die Oberseite des ersten Winkelabschnitts 11a drückender Weise festgezogen ist. Mittels dieser Schraubverbindung 19 ist das Befestigungselement 11 mit der Vertikalstrebe 7 elastisch verbunden. Da die Horizontalstrebe 9 auf der obersten Lage der Gasflaschen 2 aufliegt, kann damit die Vorspannkraft des Federelements 17 und damit die Kraft, mit der die jeweilige Horizontalstrebe 9 auf die oberste Lage der Gasflaschen 2 drückt, über die Sechskantmutter 18 eingestellt werden. Das Federelement 17 umfasst in der dargestellten Ausführungsform vier Tellerfedern, die eine Federsäule bilden. Diese übt eine quer und im vorliegenden Fall auch senkrecht zur Längsachse der Gasflaschen 2 wirkende Kraft auf das Befestigungselement 11 aus, die das Befestigungselement 11 über seinen dritten Abschnitt 11c in die jeweilige Horizontalstrebe 9 einleitet und diese damit gegen die Gasflaschen 2 der obersten Lage drückt. Die unter der obersten Lage liegenden Gasflaschen 2 werden dadurch gegeneinander und gegen die Ladefläche 4 gepresst. Dabei lässt das Federelement 17 eine Bewegung der jeweiligen Horizontalstrebe 9 relativ zur entsprechenden Vertikalstrebe 7 und damit zur Ladefläche 4 gegen die von dem Federelement 17 ausgeübte Vorspannkraft zu.

Bei der Entleerung und Befüllung der Gasflaschen 2 tritt eine Durchmesseränderung auf, die eine nicht unwesentliche Änderung der Höhe der in einem Kompartiment 8 gelagerten und gestapelten Gasflaschen 2 bewirken kann. Bei einer Vergrößerung des Durchmessers der Gasflaschen 2 drücken diese gegen die jeweilige Horizontalstrebe 9, so dass dann eine von der Ladefläche 4 weg weisende Kraft auf die Horizontalstrebe 9 und damit auf das Befestigungselement 11 wirkt. Das Befestigungselement 11 wird infolge dieser Krafteinwirkung gegen die Kraft des Federelements 17 nach oben gedrückt. Bei dieser Aufwärtsbewegung wird das Befestigungselement 11 von der Schraube 13 geführt, da die Schraube 13 durch die Durchtrittsöffnungen 12 des Befestigungselements 11 hindurch verläuft. Bei abnehmendem Durchmesser der Gasflaschen 2 wird aufgrund der Vorspannkraft des Federelements 17 eine zur Ladefläche 4 hin gerichtete Kraft an der jeweiligen Horizontalstrebe 9 wirksam. Dabei verschiebt sich infolge der Vorspannkraft des Federelements 17 das Befestigungselement 11 in Richtung zur Ladefläche 4 und wird dabei von der Schraube 13 so geführt, dass die jeweilige Horizontalstrebe 9 weiterhin gegen die oberste Lage der Gasflaschen 2 gerückt ist, wodurch die Gasflaschen 2 eines Kompartiments 8 weiterhin verrutschfest gesichert sind. Insgesamt wird durch die beschriebene Ausbildung des Befestigungselements 11 und des mechanischen Verspannmittels 10 erreicht, dass sich die Gasflaschen 2 ausdehnen und wieder zusammenziehen können und dennoch jederzeit die Horizontalstrebe 9 mit einer solchen Kraft auf die oberste Lage der Gasflaschen drückt, dass diese und die darunter befindlichen Lagen sicher auf der Ladefläche 4 zwischen den Vertikalstreben 7 gehalten und befestigt sind.

Zur Be- und Entladung eines oder der Kompartimente 8 müssen lediglich die Schraube 15 von der jeweiligen Horizontalstrebe 9 gelöst und die Mutter 18 gelockert werden, damit die jeweilige Horizontalstrebe an einer Querkante 3b des Rahmens 3 seitlich in Richtung der Anhängerlängsachse herausgezogen werden kann.

In einer nicht dargestellten Ausführungsform kann das Befestigungselement 11 zusätzlich mit dem Rahmen 3 oder nur mit diesem anstelle mit einer Horizontalstrebe 9 verbunden sein. Bei diesen Ausführungsformen lässt das Federelement 17 des mechanischen Verspannmittels 10 eine Bewegung der jeweiligen Vertikalstrebe 7 relativ zur Ladefläche 4 gegen die von dem Federelement 17 ausgeübte Vorspannkraft zu.

Es versteht sich von selbst, dass die vorstehend beschriebene Konstruktion nicht nur für einen Anhänger verwendet werden kann, sondern auch auf ein auf der Ladefläche 4 des Anhängers 2 ausgebildetes Transportmodul übertragbar ist, welches eine Kompartiment-Ladefläche auf dem Rahmen 3 des Anhängers 1 ausbildet. Ein solches Transportmodul umfasst die Vertilcalstreben 7, Horizontalstreben 9 und Querträger 16, die mittels jeweiliger mechanischer Verspannmittel 10 miteinander verbunden sind und die auf dem Transportmodul gelagerten Gasflaschen 2 verrutschfest sichern.

## Patentansprüche

1. Anhänger (1), insbesondere Auflieger, mit zwischen sich eine Ladefläche (4) des Anhängers (1) für darauf angeordnete zylindrische Behälter (2), insbesondere Gasflaschen mit hohem Betriebsdruck, begrenzenden Vertikalstreben (7), die an einem die Ladefläche (4) tragenden und/oder ausbildenden Rahmen (3) befestigt sind und die jeweils in einem der Ladefläche (4) abgewandten Bereich mit einer Horizontalstrebe (9), deren Längsachse nicht parallel zur Längsachse der zylindrischen Behälter (2) ausgerichtet ist, in einer die zylindrischen Behälter (2) mittels eines lösbaren mechanischen Verspannmittels (10) mit einer quer zur Behälterlängsachse wirkenden Kraft vorspannend und gegeneinander und/oder gegen die Ladefläche (4) pressenden Weise verbunden sind, wobei das mechanische Verspannmittel (10) ein mit der jeweiligen Vertikalstrebe (7) insbesondere über eine Schraubverbindung (19) verbundenes und mit der jeweiligen Horizontalstrebe (9) oder dem Rahmen (3) verbundenes Befestigungselement (11) umfasst,
**dadurch gekennzeichnet,**
**dass** das die Verbindung zwischen einer Vertikalstrebe (7) und einer Horizontalstrebe (9) und/oder dem Rahmen (3) bewirkende mechanische Verspannmittel (10) ein auf die Vertikalstrebe (7) und/oder die Horizontalstrebe (9) wirkendes Federelement (17) umfasst, das eine Bewegung von Vertikalstrebe (7) und/oder Horizontalstrebe (9) relativ zur Ladefläche (4) gegen eine von dem Federelement (17) ausgeübte Vorspannkraft zulässt.

2. Anhänger (1) nach Anspruch 1, **dadurch gekennzeichnet, dass** das Verspannmittel (10) ein winkelförmige Befestigungselement (11) umfasst, das einerseits an der Vertikalstrebe (7) und andererseits an der Horizontalstrebe (9) oder dem Rahmen (3) befestigt ist, und auf das Federelement (7) einwirkt.

3. Anhänger (1) nach Anspruch 2, **dadurch gekennzeichnet, dass** das Befestigungselement (11) in Form eines Winkelelements ausgebildet ist, dessen erster Winkelabschnitt (11a) an der Vertikalstrebe (7) und dessen dritter Winkelabschnitt (11c) an der Horizontalstrebe (9) oder dem Rahmen (3) befestigt ist, wobei der erste Winkelabschnitt (11a) oder der dritte Winkelabschnitt (11c) das mit einer Schraubverbindung (19) zusammenwirkende Federelement (17) trägt.

4. Anhänger (1) nach Anspruch 3, **dadurch gekennzeichnet, dass** der erste Winkelabschnitt (11a) mittels der Schraubverbindung (19) an der zugeordneten Vertikalstrebe (7) befestigt und gelagert ist, wobei der erste Winkelabschnitt (11a) als von der Schraubverbindung (19) durchdrungenes Profilrohr ausgebildet ist.

5. Anhänger (1) nach einem der Ansprüche 3 oder 4, **dadurch gekennzeichnet, dass** in dem ersten Winkelabschnitt (11a) ein zwei an gegenüberliegenden Längskanten (3a) angeordnete Vertikalstreben (7) verbundener Querträger (16) angeordnet ist.

6. Anhänger (1) nach einem der vorhergehenden Ansprüche,
**dadurch gekennzeichnet, dass** das Federelement (17) zumindest eine Tellerfeder, vorzugsweise eine aus mehreren Tellerfedern bestehende Federsäule, ist.

7. Anhänger (1) nach einem der vorhergehenden Ansprüche, **dadurch gekennzeichnet, dass** die zylindrischen Behälter (2) senkrecht zur Längsachse des Anhängers (1) in horizontalen Lagen wabenartig auf der Ladefläche (4) angeordnet sind.

8. Transportmodul eines Anhängers (1), insbesondere Aufliegers, mit zwischen sich eine Kompartiment-Ladefläche des Transportmoduls für darauf angeordnete zylindrische Behälter (2), insbesondere Gasflaschen mit hohem Betriebsdruck, begrenzenden Vertikalstreben (7), die an einem die Kompartiment-Ladefläche tragenden und/oder ausbildenden Rahmen (3) befestigt sind und die jeweils in einem der Kompartiment-Ladefläche abgewandten Bereich mit einer Horizontalstrebe (9), deren Längsachse nicht parallel zur Längsachse der zylindrischen Behälter (2) ausgerichtet ist, in einer die zylindrischen Behälter (2) mittels eines lösbaren mechanischen Verspannmittels (10) mit einer quer zur Behälterlängsachse wirkenden Kraft vorspannenenden und gegeneinander und/oder gegen die Kompartiment-Ladefläche pressenden Weise verbunden sind, wobei das mechanische Verspannmittel (10) ein mit der jeweiligen Vertikalstrebe (7) insbesondere über eine Schraubverbindung (19) verbundenes und mit der jeweiligen Horizontalstrebe (9) oder dem Rahmen (3) verbundenes Befestigungselement (11) umfasst,
**dadurch gekennzeichnet,**
**dass** das die Verbindung zwischen einer Vertikalstrebe (7) und einer Horizontalstrebe (9) und/oder dem Rahmen (3) bewirkende mechanische Verspannmittel (10) ein auf die Vertikalstrebe (7) und/oder die Horizontalstrebe (9) wirkendes Federelement (17) umfasst, das eine Bewegung von Vertikalstrebe (7) und/oder Horizontalstrebe (9) relativ zur Kompartiment-Ladefläche gegen eine von dem Federelement (17) ausgeübte Vorspannkraft zulässt.

9. Transportmodul nach Anspruch 8, **dadurch gekennzeichnet, dass** das Verspannmittel (10) ein winkelförmiges Befestigungselement (11) umfasst, das einerseits an der Vertikalstrebe (7) und andererseits an der Horizontalstrebe (9) oder dem Rahmen (3) befestigt ist, und auf das Federelement (7) einwirkt.

10. Transportmodul nach Anspruch 8, **dadurch gekennzeichnet, dass** das Befestigungselement (11) in Form eines Winkelelements ausgebildet ist, dessen erster Winkelabschnitt (11a) an der Vertikalstrebe (7) und dessen dritter Winkelabschnitt (11c) an der Horizontalstrebe (9) oder dem Rahmen (3) befestigt ist, wobei der erste Winkelabschnitt (11a) oder der dritte Winkelabschnitt (11c) das mit einer Schraubverbindung (19) zusammenwirkende Federelement (17) trägt.

11. Transportmodul nach Anspruch 10, **dadurch gekennzeichnet, dass** der Winkelabschnitt (11a) mittels der Schraubverbindung (19) an der zugeordneten Vertikalstrebe (7) befestigt und gelagert ist, wobei der erste Winkelabschnitt (11a) als von der Schraubverbindung (19) durchdrungenes Profilrohr ausgebildet ist.

12. Transportmodul nach einem der Ansprüche 10 bis 11, **dadurch gekennzeichnet, dass** in dem ersten Winkelabschnitt (11a) ein zwei an gegenüberliegenden Längskanten (3a) angeordnete Vertikalstreben (7) verbundener Querträger (16) angeordnet ist.

13. Transportmodul nach einem der Ansprüche 8 bis 12, **dadurch gekennzeichnet, dass** das Federelement (17) zumindest eine Tellerfeder, vorzugsweise eine aus mehreren Tellerfedern bestehende Federsäule, ist

14. Transportmodul nach einem der Ansprüche 8 bis 13, **dadurch gekennzeichnet, dass** die zylindrischen Behälter (2) senkrecht zur Längsachse des Transportmoduls in horizontalen Lagen wabenartig auf der Kompartiment-Ladefläche angeordnet sind.
